# FASCICULE DE BREVET EUROPEEN

(11) **EP 3 085 065 B1**
(45) Date de publication et mention de la délivrance du brevet: **01.04.2020**
(21) Numéro de dépôt: 14830816.6
(22) Date de dépôt: 17.12.2014
(51) Int. Cl.: H04L 29/12, H04L 29/06, H04L 29/08

(54) **PROCÉDÉ DE MISE A JOUR DYNAMIQUE D'INFORMATIONS OBTENUES DE LA PART D'UN SERVEUR DNS**
VERFAHREN ZUR AKTUALISIERUNG DER VON EINEM DNS SERVER ERHALTENEN INFORMATIONEN.
METHOD FOR DYNAMIC UPDATE OF INFORMATION OBTAINED FROM A DNS SERVER.

(30) Priorité: 20.12.2013 FR 1363203
(43) Date de publication de la demande: 26.10.2016
(73) Titulaire: Orange, 75015 Paris (FR)
(72) Inventeur: LE ROUZIC, Jean-Claude, F-22560 Trebeurden (FR); DOREE, José, F-22300 Lannion (FR)
(86) Numéro de dépôt international: PCT/FR2014/053393
(87) Numéro de publication internationale: WO 2015/092278

(56) Documents cités:
- US-A1- 2012 179 801
- US-B1- 8 522 086

## Description

La présente invention concerne les réseaux de communications de type IP (« *Internet Protocol* »), et notamment ceux parmi les réseaux IP qui sont aptes à mettre en œuvre des protocoles de contrôle de session évolués. Les réseaux IP permettent la diffusion de données conversationnelles, dans le cadre de services tels que « Voix sur IP » (VoIP), « Partage de Contenu », ou « Messagerie Instantanée ».

Plus particulièrement, la présente invention concerne les moyens mis en place dans un réseau IP pour permettre à des entités de ce réseau telles que des serveurs de cœur de réseau ou des dispositifs-clients («*User Equipment*» en anglais), de mettre à jour de façon dynamique des informations obtenues par ces entités de la part d'un serveur DNS.

Ces « dispositifs-clients » peuvent par exemple être un terminal fixe ou mobile, ou une passerelle domestique (« *Residential Gateway* » en anglais) ou située dans une entreprise, ou encore une passerelle d'opérateur réseau (« *Voice Gateway »* en anglais) telle qu'un DSLAM-SIP (DSLAM sont les initiales des mots anglais « *Digital Subscriber Line Access Multiplexer* » signifiant « Multiplexeur d'Accès de Lignes d'Abonnés Numériques » ; il s'agit d'un dispositif collectant le trafic de données DSL qui transite sur un certain nombre de lignes téléphoniques).

On dira qu'un dispositif-client « appartient » au réseau d'un opérateur donné lorsque l'utilisateur de ce dispositif-client possède un compte auprès de cet opérateur, et ce, quel que soit le réseau d'accès utilisé par le dispositif-client pour se connecter au réseau de l'opérateur.

Des exemples de serveurs de cœur de réseau aptes à mettre en œuvre la présente invention seront fournis plus bas.

Les services de communication sur réseau IP peuvent identifier des ressources physiques ou virtuelles au moyen de chaînes de caractères telles qu'une « URI » (initiales des mots anglais « *Uniform Resource Identifier*» signifiant « Identifiant Uniforme de Ressource»). La syntaxe des URIs est définie dans le document RFC 3986 de l'IETF ; la connaissance de l'URI d'une ressource permet d'obtenir l'adresse IP d'un équipement du réseau de l'opérateur gérant cette ressource. Dans la présente description, nous appellerons « URI » tout type d'identifiant de ressource applicative physique ou virtuelle accessible sur un réseau.

Les protocoles de contrôle de session évolués classiques, tels que le protocole SIP (initiales des mots anglais « *Session Initiation Protocol* » signifiant « Protocole d'Initiation de Session »), utilisent des messages dits de « signalisation », qui sont des messages permettant à un terminal de demander une connexion avec un autre terminal, ou également des messages signalant qu'une ligne téléphonique est occupée, ou signalant que le téléphone appelé sonne, ou encore signalant que tel téléphone est connecté au réseau et peut être joint de telle ou telle manière.

Le protocole SIP a été défini par l'IETF (*Internet Engineering Task Force*) dans le document RFC 3261. Ce protocole permet l'établissement, la modification et la terminaison de sessions multimédia dans un réseau utilisant le protocole IP. Le protocole SIP a ensuite été étendu notamment dans le document RFC 3265. Cette extension permet des procédures de notification d'événements.

Dans les réseaux mettant en œuvre le protocole SIP, on distingue deux types d'identifiants de ressource : ceux de la forme « SIP-URI » telle que définie dans la RFC 3261, ou ceux de la forme « tel-URI » telle que définie dans la RFC 3966. Une SIP-URI est de la forme « sip:user@host » (par exemple, sip:alice@domaine1), où la partie « host » identifie le domaine de l'opérateur responsable de l'identité représentée par la partie « user ». Une tel-URI est de la forme « tel:numéro_de_téléphone » (par exemple, tel:+33123456789) en référence aux numéros de téléphone publics internationaux, ou de la forme « tel:numéro_de_téléphone;phone-context=... » (par exemple, tel:0623456789;phone-context=+33) en référence aux numéros de téléphone dont le format n'est valable que dans un contexte plus restreint (dans cet exemple, le format de numéro à dix chiffres 0623456789 n'est valable que dans le plan de numérotation français).

Le protocole SIP est utilisé en particulier dans les infrastructures de type IMS (initiales des mots anglais *« IP Multimedia Subsystem »* signifiant « Sous-système Multimédia sur IP »). L'IMS a été défini par l'organisme de normalisation 3GPP (« *3^{rd} Génération Partnership Project* ») et TISPAN (« *Télécommunications and Internet Converged Services and Protocols for Advanced Networking* »). C'est une architecture de réseau introduite par le 3GPP pour les réseaux mobiles, puis reprise par TISPAN pour les réseaux fixes. Cette architecture permet l'établissement dynamique et le contrôle de sessions multimédia entre deux clients ainsi que la réservation des ressources au niveau du réseau de transport des flux multimédias. Grâce à cette architecture, les opérateurs réseau peuvent commodément mettre en œuvre une politique de gestion, fournir une Qualité de Service prédéterminée, et calculer les montants à facturer aux clients. L'IMS permet actuellement d'accéder à des services de type téléphonie, visiophonie, Présence et Messagerie Instantanée, dont elle gère aussi l'interaction.

Lorsqu'un utilisateur souhaite bénéficier des services offerts par un réseau IMS, il émet vers le réseau des messages de signalisation pouvant inclure notamment divers types de requêtes.

Tout d'abord, le dispositif-client de l'utilisateur doit, sauf exceptions (telles que certains appels d'urgence), s'enregistrer sur le réseau. Lorsque le réseau est incapable de faire le lien entre cet enregistrement et un enregistrement précédent (par exemple suite à une panne réseau, ou suite à un arrêt du terminal pendant une durée supérieure à une valeur prédéterminée), l'enregistrement est considéré comme étant un enregistrement initial. Après un enregistrement initial, le dispositif-client de l'utilisateur doit envoyer périodiquement au réseau une requête pour confirmer qu'il souhaite maintenir son enregistrement ; en effet, cet enregistrement n'est maintenu que pendant une durée prédéterminée, que nous appellerons « période de rafraîchissement d'enregistrement » (souvent désignée par « Expires » dans la littérature technique) ; à titre exemple, le document RFC 3261 mentionné ci-dessus préconise une période de rafraîchissement d'enregistrement égale à 3600 secondes. En pratique, c'est le réseau qui indique à chaque dispositif-client qui s'enregistre la valeur de la période de rafraîchissement d'enregistrement que ce dispositif-client devra respecter pour pouvoir bénéficier sans interruption des services offerts par ce réseau.

Pour pouvoir donc enregistrer les dispositifs-clients, les réseaux IMS comprennent un ou plusieurs serveurs d'enregistrement, appelés « S-CSCF » (initiales des mots anglais « *Serving-Call Server Control Function »* signifiant « Fonction de Commande de Session d'Appel Serveuse »), aptes (entre autres fonctions) à gérer la procédure d'enregistrement des dispositifs connectés au réseau.

En outre, ces réseaux comprennent un ou plusieurs serveurs, appelés « I-CSCF » (initiales des mots anglais « *Interrogating-Call Server Control Function »* signifiant « Fonction de Commande de Session d'Appel Interrogatrice ») - d'ailleurs souvent combinés physiquement avec les serveurs de type S-CSCF pour constituer des serveurs dénotés « I/S-CSCF » - qui, au moment de l'enregistrement d'un dispositif-client, interrogent un serveur appelé « HSS » (initiales des mots anglais « *Home Subscriber Server* » signifiant « Serveur d'Abonné de Rattachement»), afin de pouvoir sélectionner un serveur S-CSCF possédant les caractéristiques qui sont obligatoirement (et, le cas échéant, optionnellement) requises pour atteindre le niveau de service souscrit par l'utilisateur. Les serveurs HSS contiennent chacun une base de données-clients, et sont donc l'équivalent dans les réseaux IP des serveurs « HLR » (initiales des mots anglais « *Home Location Register »* signifiant « Registre de Localisation de Rattachement ») utilisés dans les réseaux GSM. Chaque serveur HSS contient le « profil » d'un certain nombre de dispositifs-clients du réseau, ce profil comprenant leur état d'enregistrement, des données d'authentification et de localisation, et les services souscrits.

En effet, chaque utilisateur peut, après qu'un serveur S-CSCF lui ait été ainsi attribué, envoyer une requête de souscription à certains services valable pour la connexion en cours. Le principe général est qu'un dispositif-client peut souscrire à un service technique particulier à l'aide d'une requête appropriée (SIP SUBSCRIBE). Ainsi, dans le cas d'une souscription à l'état d'une ressource, des notifications d'événement (SIP NOTIFY) sont envoyées au dispositif-client dès lors que l'état de la ressource change ; par exemple, lorsque l'utilisateur d'un terminal dispose d'une boîte vocale sur le réseau, ce terminal peut souscrire à une notification de dépôt de message, c'est-à-dire qu'il peut demander à être informé chaque fois qu'un message a été enregistré sur cette boîte vocale ; le terminal de l'utilisateur peut, de même, demander à être notifié de son propre état d'enregistrement, et ainsi de suite.

Les requêtes de souscription initiales sont émises soit de manière automatique juste après le démarrage du terminal ou d'une application installée sur ce terminal, soit suite à une action de l'utilisateur sur l'interface du terminal. Pour chaque souscription, le dispositif-client doit émettre d'abord une requête initiale, et puis périodiquement une requête pour renouveler sa souscription (on parle de « rafraîchissement » de la souscription).

Pour chaque souscription (qu'il s'agisse d'une souscription initiale ou d'un rafraîchissement), le réseau indique au dispositif-client la période de rafraîchissement souhaitée par l'opérateur du réseau pour cette souscription. Dans le cas du document RFC 3265, la période de rafraîchissement maximale associée à la souscription à un service technique (« *event-package* » en anglais) particulier offert par le réseau est définie par renvoi au document qui définit ce service technique particulier ; par exemple, concernant la souscription à la notification de dépôt de message, le document RFC 3842 préconise (cf. « *event-package message summary* ») une période de rafraîchissement allant de quelques heures à quelques jours.

On rappelle également que le système DNS (initiales des mots anglais « *Domain Name System* » signifiant « Système de Noms de Domaine ») est un service permettant de trouver une information à partir d'un nom de domaine. Les serveurs DNS mettent à la disposition de tout entité réseau (appelé « *DNS resolver »* en anglais) ayant émis une requête DNS des associations nom-de-domaine/information-d'un-certain-type, appelées « enregistrements de ressources » (« *resource records »* en anglais). En particulier, les enregistrements NAPTR (initiales des mots anglais « *Naming Authority Pointer Resource Records* » signifiant « Enregistrements de Pointeurs d'Autorité de Nommage »), décrits dans la RFC 3403, spécifient des règles de substitution destinées à être appliquées à une chaîne de caractères dans le but de produire un certain résultat, tel que, notamment, un autre nom de domaine ou une URI. Le système DNS, via les enregistrements NAPTR, permet ainsi de faire correspondre une chaîne de caractères à une autre par le biais d'une recherche de nom de domaine. On appelle « configuration DNS » l'ensemble des données enregistrées à un moment donné dans un serveur DNS donné.

Dans le cadre de la présente invention, on appellera « information DNS » toute information d'un type faisant l'objet d'un enregistrement dans au moins un serveur DNS d'un réseau IP.

Pour pouvoir établir une communication via un (ou plusieurs) réseau(x), le réseau/domaine, dénommé « domaine d'origine » ci-après, auquel appartient l'appelant doit donc connaître l'identité du réseau/domaine, dénommé « domaine destinataire » ci-après, permettant de joindre l'utilisateur appelé. Or l'appelant ne connaît bien souvent que le numéro de téléphone de l'utilisateur appelé, ledit numéro de téléphone étant au format public selon la recommandation E.164 ou à un format privé. On rappelle à cet égard que le format des numéros de téléphone publics à l'échelle internationale est défini par la recommandation E.164 de l'ITU-T ; l'ITU-T est une partie de l'UIT (« Union Internationale des Télécommunications ») chargée de la mise au point de normes internationales.

Malheureusement, ce numéro de téléphone ne permet pas de déterminer facilement l'identité du domaine destinataire ; autrement dit, il n'existe pas d'association automatique entre l'identifiant E.164 et l'URI (ou les URIs) d'entrée du domaine destinataire. On notera à cet égard qu'un domaine peut posséder plusieurs URIs d'entrée, lesquelles peuvent d'ailleurs éventuellement être fonction de l'identité du domaine de l'appelant ; par souci de brièveté, dans le présent document, on désigne occasionnellement par « l'URI du domaine destinataire » le, ou les URI(s) d'entrée de ce domaine.

Pour résoudre ce problème, le domaine d'origine peut par exemple mettre en œuvre une application ENUM. L'application ENUM utilise une base de données propre au réseau auquel appartient ce domaine d'origine et qui contient des enregistrements NAPTR particuliers définis dans la RFC 3761. L'application ENUM permet, par requête DNS au moyen d'une clé d'interrogation (telle que décrite ci-dessus) représentative d'un numéro de téléphone au format E.164, de connaître les URIs utilisables pour joindre un correspondant. Ces URIs pointent sur des ressources ou des services associés au numéro E.164 du correspondant comme, par exemple, une adresse e-mail, une page Web, un service d'annuaire, des numéros de renvoi fixes ou mobiles, ou un alias de Voix sur IP, de visiophonie ou de messagerie instantanée.

Une certaine durée de vie (« *Time To Live* », ou TTL, en anglais) est associée aux informations DNS fournies par le serveur DNS au *DNS resolver,* afin d'éviter que ce *DNS resolver* ne procède à une nouvelle interrogation DNS lors de chaque émission d'une requête vers un destinataire donné. On dit que le *DNS resolver* « met en cache » ces informations pendant une certaine durée. Toute information ainsi mise en cache sera appelée « copie d'une information DNS » dans le cadre de la présente invention.

Le système DNS permet ainsi un routage très efficace des requêtes. En particulier, si une adresse IP distante devient indisponible, il est possible pour le *DNS resolver* d'exploiter d'autres enregistrements DNS relatifs à la résolution d'un nom de domaine donné, afin de trouver une autre adresse IP vers qui renvoyer la requête, cette autre adresse IP ayant une priorité plus faible que l'adresse IP devenue indisponible.

Ce système de traduction DNS souffre néanmoins d'un problème important : il n'est pas possible de demander à une entité réseau de mettre à jour ses informations DNS. Il en résulte une contrainte forte pour l'opérateur, car cela lui impose d'avoir des durées de vies d'enregistrement TTL courtes, afin que les nœuds du réseau puissent réagir en un temps raisonnable à toute modification de la topologie du réseau. Cependant cette diminution du TTL à des impacts potentiellement très importants en terme de charge de trafic, notamment s'il s'agit d'un serveur DNS utilisé par les terminaux d'abonnés.

Aussi observe-t-on que, pour diminuer la charge de trafic, certains équipements réseaux comme les terminaux ou les passerelles résidentielles ne font une interrogation DNS que lors de leur l'initialisation, et gardent donc les informations reçues du serveur DNS jusqu'au prochain redémarrage, sans tenir compte de la valeur du TTL. Pour ces équipements, les modifications intervenues dans un enregistrement DNS ne seront donc prises en compte que lors du prochain redémarrage.

De même, si un réaménagement réseau est nécessaire, l'opérateur est obligé de planifier les modifications DNS suffisamment à l'avance pour être sûr que l'ensemble des nœuds du réseau auront pu voir le TTL des anciennes informations DNS expirer. Par conséquent, dans l'état de l'art, la gestion d'un réaménagement réseau pour faire face à une situation de surcharge temporaire est quasiment impossible.

Pour résoudre ce problème, le brevet US 8 522 086 divulgue un procédé d'utilisation d'un système informatique, ledit système informatique comprenant :
- une pluralité de nœuds informatiques, dans lesquels au moins un service est exécuté sur au moins un des nœuds informatiques d'un premier sous-réseau,
- un contrôleur de disponibilité contrôlant la disponibilité du service sur au moins un des nœuds informatiques et pouvant relocaliser le service depuis un nœud informatique du premier sous-réseau à un autre nœud informatique d'un deuxième sous-réseau,
- au moins un ordinateur client exécutant au moins une application informatique adaptée pour accéder au service, et
- un service DNS fournissant au moins une adresse réseau à laquelle le service est accessible à l'ordinateur de client, l'ordinateur client comprenant une base de données locale comprenant au moins une entrée enregistrant l'adresse réseau, obtenue à partir du DNS, à laquelle le service est accessible,
ledit procédé comprenant, en réponse à la relocalisation du service par le contrôleur depuis un nœud du premier sous-réseau à un nœud du second sous-réseau, de sorte que le service n'est plus accessible à l'adresse réseau enregistrée dans la base de donnée locale de l'ordinateur client, la fourniture d'une notification à l'ordinateur client sans attendre la mise à jour DNS de l'adresse réseau dans la base de données locale, ladite notification indiquant que le service n'est plus accessible à l'adresse réseau enregistrée dans la base de données locale de l'ordinateur client.

Ainsi, selon ce procédé, des « contrôleurs de disponibilité » sont chargés de superviser l'ensemble des services hébergés sur un ensemble d'amas de serveurs, de déplacer les services défaillants d'un amas de serveurs à un autre, et d'informer la totalité des clients ayant sollicité un service déplacé. La mise en œuvre de ce procédé est donc extrêmement lourde, et ce, d'autant plus que le nombre de nœuds du réseau considéré est grand.

La présente invention concerne donc un procédé de mise à jour dynamique d'informations DNS dans un réseau IP, comprenant les étapes suivantes :
- une première entité dudit réseau IP, distincte des serveurs DNS du réseau IP, reçoit une requête de la part d'une seconde entité du réseau IP, elle aussi distincte des serveurs DNS du réseau IP mais possédant une copie d'une information, dite information DNS, d'un type faisant l'objet d'un enregistrement dans au moins un serveur DNS du réseau IP,
- ladite première entité répond à ladite requête en envoyant à ladite seconde entité un message comportant une indication relative au besoin de modifier ladite copie,
- suite à la réception dudit message envoyé par la première entité, la seconde entité scrute le message pour déterminer si ladite indication comprend au moins une instruction complémentaire, et
- en cas de détermination positive, la seconde entité :
   - effectue une interrogation DNS, et, suite à la réception de la réponse du serveur DNS interrogé, modifie sa copie de ladite information DNS sur la base du contenu de ladite réponse ainsi que de ladite instruction complémentaire, ou
   - modifie sa copie de ladite information DNS sur la base de ladite instruction complémentaire sans effectuer d'interrogation DNS.

Ladite première entité pourra par exemple être un serveur de cœur de réseau, et ladite seconde entité pourra par exemple être un dispositif-client tel qu'un terminal d'utilisateur, ou un autre serveur de cœur de réseau.

Grâce à ces dispositions, on peut prescrire à une entité du réseau IP (ladite seconde entité) de faire, ou de refaire, ou de ne pas faire une interrogation DNS, mais toujours en s'assurant que d'éventuelles modifications de la configuration DNS seront prises en compte par les nœuds du réseau concernés très rapidement (c'est-à-dire immédiatement, ou dès que possible compte tenu des procédures protocolaires à respecter).

L'invention offre ainsi de nouvelles possibilités pour la gestion des pannes et les procédures de restauration IMS, le réacheminement du trafic en temps réel, ainsi qu'une souplesse accrue sur la manière de réaménager un réseau, par exemple lors d'une augmentation de la capacité de ce réseau. L'invention est également très utile dans le cadre des services « *cloud* » offerts par un réseau IMS, c'est-à-dire l'accès *via* le réseau, à la demande et en libre-service, à des ressources informatiques partagées configurables, car l'invention améliore la cohérence des informations DNS utilisées par les différentes « fonctions » IMS décrites succinctement ci-dessus.

De plus, en incluant au moins une instruction complémentaire dans le message envoyé par la première entité, la première entité peut commodément indiquer le type de traitement attendu de la part de ladite seconde entité concernant sa copie de l'information DNS. La première entité peut en outre indiquer, dans un paramètre de durée de validité (ttl), pendant quelle durée s'applique ledit traitement.

Par ailleurs, selon des caractéristiques particulières, ladite indication contenue dans le message envoyé par la première entité comprend une durée d'attente pour la mise en œuvre par la seconde entité d'une interrogation DNS.

Grâce à ces dispositions, certaines procédures non-urgentes prévues dans les normes, comme par exemple le réenregistrement d'un terminal ou la souscription à certains événements, pourront être mises en œuvre après une interrogation DNS différée.

En revanche, en cas de détermination négative, c'est-à-dire en l'absence de toute instruction complémentaire selon l'invention dans le message envoyé par la première entité, la seconde entité :
- effectue une interrogation DNS, et
- suite à la réception de la réponse du serveur DNS interrogé, met à jour sa copie de ladite information DNS sur la base du contenu de ladite réponse.

Grâce à ces dispositions, on peut déclencher une mise à jour immédiate de ladite copie d'une information DNS dans la seconde entité.

Selon encore d'autres caractéristiques particulières, la première entité constate ledit besoin de modifier ladite copie d'une information DNS suite à la réception par la première entité d'un message de notification envoyé par un agent de supervision chargé de notifier certains changements de configuration d'un serveur DNS aux entités du réseau IP ayant souscrit à ce type de notification.

Grâce à ces dispositions, les dispositifs-clients connectés au réseau peuvent être informés en temps utile des modifications intervenues dans la configuration d'un serveur DNS, sans qu'ils n'aient pour autant à souscrire eux-mêmes aux notifications de changements de configuration DNS auprès dudit agent de supervision (ce qui représenterait pour le réseau une charge insupportable due aux très nombreux dialogues de souscription et de notification qui devraient alors être établis).

Corrélativement, l'invention concerne divers dispositifs.

Elle concerne ainsi, un dispositif, dit seconde entité, d'un réseau IP, distincte des serveurs DNS dudit réseau IP. Ladite seconde entité est remarquable en ce qu'elle possède des moyens pour :
- recevoir, de la part d'une première entité distincte des serveurs DNS du réseau IP, un message comportant une indication relative au besoin de modifier sa copie d'une information, dite information DNS, d'un type faisant l'objet d'un enregistrement dans au moins un serveur DNS du réseau IP,
- scruter ledit message pour déterminer si ladite indication comprend au moins une instruction complémentaire, et
- en cas de détermination positive :
   - effectuer une interrogation DNS, et, suite à la réception de la réponse du serveur DNS interrogé, modifier sa copie de ladite information DNS sur la base du contenu de ladite réponse ainsi que de ladite instruction complémentaire, ou
   - modifier sa copie de ladite information DNS sur la base de ladite instruction complémentaire sans effectuer d'interrogation DNS.

Selon des caractéristiques particulières, ladite seconde entité possède en outre des moyens pour mettre en œuvre une interrogation DNS après une durée d'attente mentionnée dans ladite indication.

Selon encore d'autres caractéristiques particulières, en cas de détermination négative, ladite seconde entité possède en outre des moyens pour :
- effectuer une interrogation DNS, et
- suite à la réception de la réponse du serveur DNS interrogé, mettre à jour sa copie de ladite information DNS sur la base du contenu de ladite réponse.

L'invention concerne également un réseau IP comprenant :
- un dispositif, dit première entité, distincte des serveurs DNS dudit réseau IP,
- une deuxième entité conforme à l'invention ;
ladite première entité possédant des moyens pour :
- constater un besoin pour la seconde entité du réseau de modifier sa copie d'une information, dite information DNS, d'un type faisant l'objet d'un enregistrement dans au moins un serveur DNS du réseau IP, et
- envoyer à ladite seconde entité du réseau un message comportant une indication relative audit besoin.
Ladite première entité est remarquable en ce qu'elle possède en outre des moyens pour souscrire à la notification de certains changements de configuration d'un serveur DNS auprès d'un agent de supervision dédié, et en ce que lesdits moyens pour constater un besoin de modifier ladite copie d'une information DNS comprennent des moyens de réception d'un message de notification envoyé par ledit agent de supervision.

Les avantages offerts par ces dispositifs sont essentiellement les mêmes que ceux offerts par les procédés corrélatifs succinctement exposés ci-dessus.

On notera qu'il est possible de réaliser ces dispositifs dans le contexte d'instructions logicielles et/ou dans le contexte de circuits électroniques.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes du procédé de mise à jour dynamique d'informations DNS succinctement exposé ci-dessus, lorsqu'il est exécuté sur un ordinateur.

Les avantages offerts par ce programme d'ordinateur sont essentiellement les mêmes que ceux offerts par ledit procédé.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :
- la figure 1 représente schématiquement un système pour la fourniture de services multimédia apte à mettre en œuvre l'invention,
- la figure 2 illustre un mécanisme de mise à jour dynamique d'informations DNS associé à la redirection d'une requête REGISTER, selon un premier mode de réalisation de l'invention,
- la figure 3 illustre un mécanisme de mise à jour dynamique d'informations DNS associé à un changement de P-CSCF sur requête INVITE, selon un deuxième mode de réalisation de l'invention, et
- la figure 4 illustre un mécanisme de mise à jour dynamique d'informations DNS associé à une souscription dédiée aux changements de configuration DNS, selon un troisième mode de réalisation de l'invention.

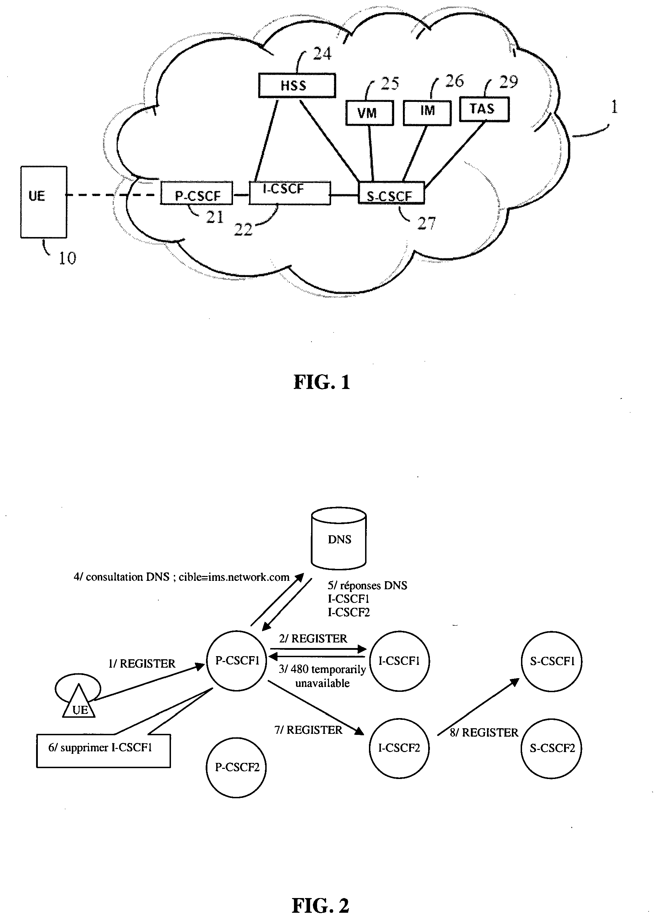

Bien que la présente invention concerne les réseaux IP en général, on va considérer à présent, à titre d'exemple de réalisation, une architecture de réseau de type IMS, telle que présentée succinctement ci-dessus. Cette architecture est illustrée sur la **figure 1****.**

Les services multimédia offerts par ce réseau IMS 1 peuvent comprendre des services de téléphonie, de vidéo-téléphonie, de partage de contenu (« *content-sharing »* en anglais), de Présence, de Messagerie Instantanée, ou de télévision. Ces services sont à la disposition de l'utilisateur d'un dispositif-client (« *User Equipment* », ou UE en anglais) 10 appartenant au réseau 1, qui permet au dispositif-client 10 d'échanger des flux multimédias et des signaux de contrôle de session conformes au protocole SIP, par exemple avec le dispositif-client (non représenté) d'un utilisateur appartenant à un réseau SIP (non représenté) relié au réseau 1.

Le dispositif-client 10 peut être un terminal fixe ou mobile, ou une passerelle domestique ou d'entreprise, disposant de moyens de signalisation SIP et pouvant comprendre des moyens de restitution d'un contenu audiovisuel.

Comme le montre la figure 1, ce réseau IMS 1 comprend, outre une infrastructure de transport IP (non représentée) :
- au moins un serveur S-CSCF ; le serveur S-CSCF 27 gère notamment la procédure d'enregistrement des dispositifs connectés au réseau 1 ; le serveur S-CSCF 27 gère également le routage de la signalisation entre le dispositif-client 10 et les serveurs de messagerie vocale VM 25, de Messagerie Instantanée 26, et de téléphonie TAS 29 ;
- au moins un serveur I-CSCF ; le serveur I-CSCF 22 gère notamment le routage en direction d'autres terminaux gérés par le même réseau IMS 1 et le routage de la signalisation entre ce réseau IMS 1 et d'autres réseaux (non représentés) ;
- un (ou plusieurs) serveur(s) P-CSCF (initiales des mots anglais *« Proxy-Call Server Control Function »* signifiant « Fonction de Commande de Session d'Appel Mandataire ») ; le serveur P-CSCF 21 sert d'entité de raccordement entre le cœur de réseau IMS et le réseau d'accès utilisé par le dispositif-client 10; ainsi, toute la signalisation SIP échangée entre le dispositif-client 10 et le serveur d'appel I/S-CSCF 22 passe par ce serveur P-CSCF 21 ;
- un ou plusieurs serveurs de base de données, de type HSS ; un serveur HSS 24 contient le profil de l'utilisateur du dispositif-client 10 en termes de données d'authentification, de localisation et de services souscrits ;
- un (ou plusieurs) serveur(s) VM 25 de messagerie vocale (« *message-summary »* en anglais) ; un serveur VM 25 gère la souscription du dispositif-client 10 aux événements de dépôt/consultation des messages à l'intention du dispositif-client 10, et notifie le dispositif-client 10 lors de l'occurrence de ces événements ;
- un (ou plusieurs) serveur(s) de Présence PS 26 ; un serveur PS 26 reçoit, stocke et distribue les informations concernant la Présence de l'utilisateur du dispositif-client 10 sur le réseau ; et
- un (ou plusieurs) serveur(s) de téléphonie TAS 29 ; un serveur TAS gère les services téléphoniques auxquels l'utilisateur du terminal 10 a souscrits auprès de son opérateur, tels que la présentation du numéro ou le renvoi d'appel.

Les serveurs de messagerie vocale VM 25, de Présence PS 26, et de téléphonie TAS 29 sont des exemples de ce que l'on appelle des AS (initiales des mots anglais « *Application Servers* » signifiant « Serveurs d'Applications »).

Certains services, comme ceux du serveur VM 25 et du serveur PS 26, s'appuient sur la souscription du terminal 10 à des événements prédéterminés.

On va décrire à présent divers modes de réalisation du procédé de mise à jour dynamique d'informations DNS selon l'invention.

On notera que diverses variantes sont possibles concernant le format des messages envoyés par une première entité conformément à l'invention. A titre de premier exemple, on utilisera dans la description ci-dessous un nouvel en-tête du protocole SIP, que l'on appellera « Flush-DNS ».

La **figure 2** illustre les étapes d'un premier mode de réalisation de l'invention, dans lequel c'est un serveur P-CSCF qui met à jour dynamiquement ses informations DNS.

On suppose ici que, de manière classique, un serveur P-CSCF1 a interrogé à un certain moment un serveur DNS, et que l'en-tête de la requête d'interrogation indiquait comme cible (« target=ims.network.com ») le réseau IMS dont ce serveur P-CSCF1 est un point d'entrée. On suppose en outre que le serveur DNS a répondu en fournissant l'adresse de deux serveurs I-CSCF, à savoir les serveurs I-CSCF1 et I-CSCF2, en indiquant pour le serveur I-CSCF1 une priorité supérieure à celle du serveur I-CSCF2.

Lors d'une étape E1, un serveur P-CSCF1 transmet au serveur I-CSCF1 une requête d'enregistrement REGISTER, reçue précédemment par ledit serveur P-CSCF1 de la part d'un dispositif-client UE.

Lors d'une étape E2, suite par exemple à une détection de la perte du lien de transmission entre, d'une part, le serveur I-CSCF1, et d'autre part le serveur S-CSCF1 en charge de l'UE concerné, ou d'une opération de maintenance prévue sur ce lien, le serveur I-CSCF1 envoie au serveur P-CSCF1 un message d'indisponibilité temporaire comprenant l'en-tête suivant :
Flush-DNS: date=now; target=ims.network.com;
remove=ICSCF1.ims.network.com; ttl=1200.

Lors d'une étape E3, le serveur P-CSCF1 scrute ledit message et notamment l'en-tête Flush-DNS.

Cet en-tête Flush-DNS informe le serveur P-CSCF1 qu'il est nécessaire de refaire immédiatement (« date=now ») une interrogation DNS pour la cible « ims.network.com » (« target=ims.network.com ») ; de plus, cet en-tête Flush-DNS donne comme instruction que l'enregistrement DNS relatif au serveur I-CSCF1 devra ensuite être supprimé (« remove=I-CSCF1.ims.network.com ») pour une durée de 1200 secondes (« ttl=1200 »).

Lors d'une étape E4, conformément à l'en-tête Flush-DNS reçu, le serveur P-CSCF1 réinterroge le serveur DNS en indiquant à nouveau (« target=ims.network.com ») ce réseau IMS comme cible.

Lors d'une étape E5, le serveur DNS répond comme précédemment en indiquant l'adresse des serveurs I-CSCF1 et I-CSCF2.

Lors d'une étape E6, conformément à l'en-tête Flush-DNS reçu, le serveur P-CSCF1 supprime, pour une durée de 1200 secondes, son enregistrement relatif au serveur I-CSCF1.

Lors d'une étape E7, le serveur P-CSCF1 transmet donc la requête d'enregistrement au serveur I-CSCF2.

Enfin, lors d'une étape E8, le serveur I-CSCF2 transmet la requête d'enregistrement au serveur S-CSCF1 en charge de l'UE concerné.

En variante pour ce mode de réalisation, utile dans le cas où le serveur I-CSCF1 se trouve en surcharge (par exemple pour une durée prévue de 1200 secondes), le header Flush-DNS envoyé par le serveur I-CSCF1 véhicule une instruction de modification de la priorité (paramètre « priority », ou « weight ») qui lui est associée dans le serveur DNS (éventuellement après une interrogation du serveur DNS par le serveur I-CSCF1). Le contenu du header Flush-DNS pourrait alors être libellé comme suit :
Flush-DNS: date=now; target=ims.network.com;
modify=I-CSCF1.ims.network.com; priority=50; ttl=1200,
ou encore comme suit :
Flush-DNS: date=now; target=ims.network.com;
modify= sip_udp_I-CSCF1.ims.network.com; weight=25; ttl=1200.

Ainsi, dans cette variante, le P-CSCF1 interroge le serveur DNS, et modifie ensuite les priorités par rapport à celles indiquées dans la réponse DNS. Ensuite, conformément à l'en-tête Flush-DNS, le serveur P-CSCF1 choisit, pendant la durée concernée, le serveur I-CSCF2 dont la priorité est temporairement supérieure à celle du serveur I-CSCF1.

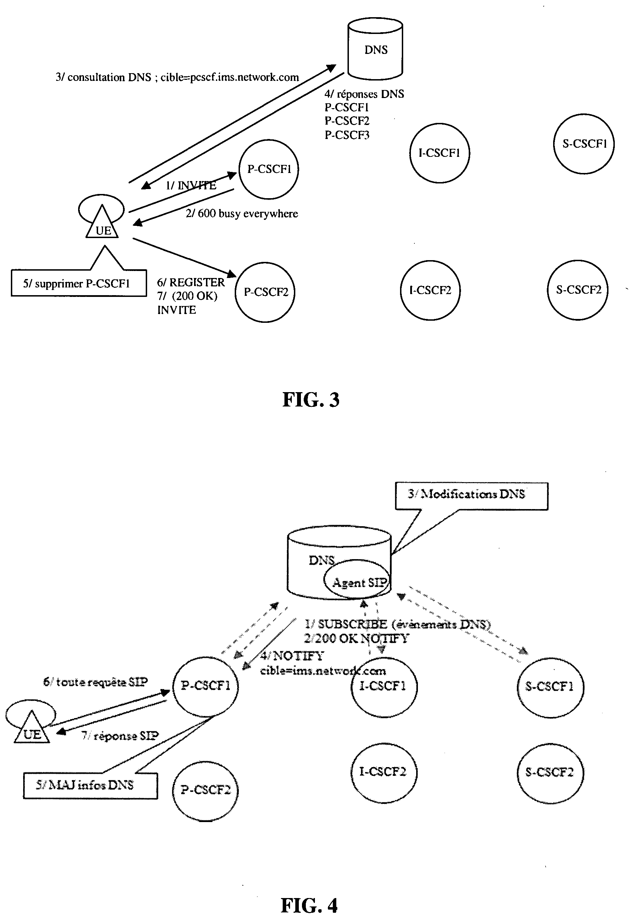

La **figure 3** illustre les étapes d'un deuxième mode de réalisation de l'invention, dans lequel c'est un dispositif-client UE qui met à jour dynamiquement ses informations DNS.

Ce mode de réalisation concerne par exemple la réaffectation de P-CSCF (suite, par exemple, à une situation de surcharge, ou à l'ajout d'un nouveau nœud de type P-CSCF). Cette réaffectation peut être mise en œuvre suite à la réception par un P-CSCF de n'importe quel type de requête SIP, par exemple une requête de communication de type INVITE.

Lors d'une étape F1, un dispositif-client UE envoie une requête INVITE à un serveur P-CSCF1.

Lors d'une étape F2, le serveur P-CSCF1, constatant qu'il est en surcharge, envoie au dispositif-client UE un message en ce sens (« busy everywhere ») comprenant, par exemple, l'en-tête suivant :
Flush-DNS: date=now; target=ims.network.com;
remove=P-CSCF1.ims.network.com; ttl=7200,
ou l'en-tête suivant :
Flush-DNS: date=now; target=ims.network.com;
remove=98.76.54.32; ttl=7200,
où « 98.76.54.32 » est l'adresse IP du serveur P-CSCF1.

Lors d'une étape F3, le dispositif-client UE scrute ledit message et notamment l'en-tête Flush-DNS.

Cet en-tête Flush-DNS informe le dispositif-client UE qu'il est nécessaire de refaire immédiatement (« date=now ») une interrogation DNS pour la cible « ims.network.com » (« target=ims.network.com ») ; de plus, cet en-tête Flush-DNS donne comme instruction que l'enregistrement DNS relatif au serveur P-CSCF1 devra ensuite être supprimé pour une durée de 7200 secondes.

Lors d'une étape F4, conformément à l'en-tête Flush-DNS reçu, le dispositif-client UE réinterroge le serveur DNS en indiquant (« target=pcscf.ims.network.com ») les serveurs P-CSCF comme cibles.

Lors d'une étape F5, le serveur DNS répond en indiquant l'adresse des serveurs P-CSCF1, P-CSCF2 et P-CSCF3.

Lors d'une étape F6, conformément à l'en-tête Flush-DNS reçu, le dispositif-client UE supprime, pour une durée de 7200 secondes, son enregistrement relatif au serveur P-CSCF1.

Lors d'une étape F7, le dispositif-client UE envoie donc une requête d'enregistrement REGISTER au serveur P-CSCF2.

Enfin, lors d'une étape F8, après avoir reçu l'accusé de réception (« 200 OK »), le dispositif-client UE envoie une requête INVITE au serveur P-CSCF2.

En variante pour ce mode de réalisation, la réaffectation de P-CSCF est mise en œuvre suite à la réception d'une requête d'enregistrement de type REGISTER. Le serveur P-CSCF1, par exemple dans une réponse « 200 OK » à cette requête REGISTER, indique dans l'en-tête Flush-DNS une durée (date=...) valorisée avec une valeur supérieure à celle de la période d'enregistrement. En conséquence, ce n'est qu'après son prochain enregistrement que le dispositif-client UE effectuera une interrogation DNS et mettra ensuite en application les instructions contenues dans l'en-tête Flush-DNS. Cette variante permet avantageusement de réaménager le réseau sans provoquer une avalanche d'enregistrements.

Par ailleurs, la présente l'invention propose un nouvel évènement de souscription, dédié aux changements de configuration DNS, et associe à cet évènement de souscription un agent de supervision SIP ; cet agent de supervision sera, de préférence, implanté directement sur le serveur DNS. Cet agent de supervision sera en charge du traitement des demandes de souscription, envoyées par des entités réseau, aux évènements concernant certains changements de configuration DNS. La demande de souscription peut inclure des informations sur le domaine IP ou la cible DNS pour lesquels le souscripteur souhaite recevoir une notification.

Cet agent de supervision sera également en charge de l'émission des notifications de ces changements de configuration DNS aux souscripteurs. Ces derniers pourront alors soit réinterroger le serveur DNS, soit simplement extraire du contenu du corps (body xml) du message de notification les informations de mise à jour pour les enregistrements DNS concernés.

La **figure 4** illustre les étapes d'un troisième mode de réalisation de l'invention, dans lequel on utilise la souscription selon l'invention.

Lors d'une étape S1, un serveur P-CSCF1, un serveur I-CSCF1 et un serveur S-CSCF1 souscrivent (requête SUBSCRIBE) aux évènements DNS.

Lors d'une étape S2, l'agent de supervision DNS répond à chacun de ces serveurs avec un message « 200 OK » suivi d'un message « NOTIFY » pour terminer la procédure d'établissement de la souscription. Ces étapes S1 et S2 sont représentées par des flèches hachurées sur la figure 4.

Ultérieurement, lors d'une étape S3, l'opérateur du réseau modifie certaines données enregistrées dans le serveur DNS.

Lors d'une étape S4, l'agent de supervision SIP hébergé sur le serveur DNS en est informé, et envoie une notification aux nœuds ayant souscrit à l'événement pour cette cible (target=ims.network.com).

Enfin, lors d'une étape S5, le serveur P-CSCF1 met à jour ses informations DNS. Comme mentionné ci-dessus, le serveur P-CSCF1 peut par exemple, pour ce faire, réinterroger le serveur DNS, ou extraire les informations correspondantes du corps (body xml) du message NOTIFY.

Ultérieurement, lors d'une étape G1, un dispositif-client UE envoie une requête SIP (REGISTER, INVITE, ou autre, selon les besoins du dispositif-client UE) au serveur P-CSCF1.

Lors d'une étape G2, le serveur P-CSCF1 répond alors au dispositif-client UE avec un message comprenant l'en-tête :
Flush-DNS: date=now; target=ims.network.com.

Lors d'une étape G3, le dispositif-client UE scrute ledit message et notamment l'en-tête Flush-DNS, et constate qu'il ne contient pas d'instruction complémentaire selon l'invention.

Cet en-tête Flush-DNS informe le dispositif-client UE qu'il lui faudra immédiatement (date=now), lors d'une étape G4, réinterroger le serveur DNS, et, après réception, lors d'une étape G5, de la réponse du serveur DNS, mettre à jour, lors d'une étape G6, ses informations DNS, avant d'émettre la prochaine requête d'enregistrement.

Selon un quatrième mode de réalisation de l'invention (non représenté sur les dessins), on met en œuvre une réaffectation de P-CSCF abonné par abonné (suite, par exemple, à une situation de maintenance d'un nœud de type P-CSCF). Cette réaffectation peut être mise en œuvre suite à la réception par un P-CSCF de n'importe quel type de requête SIP, par exemple une requête de communication de type INVITE.

Lors d'une étape H1, un dispositif-client UE envoie une requête INVITE à un serveur P-CSCF1.

Lors d'une étape H2, le serveur P-CSCF1, pour lequel une opération de maintenance est programmée, envoie au dispositif-client UE un message en ce sens (« busy everywhere ») comprenant, par exemple, l'en-tête suivant :
Flush-DNS: do-not-check; date=now; target=ims.network.com;
remove=98.76.54.32; ttl=36000,
où « 98.76.54.32 » est l'adresse IP du serveur P-CSCF1.

Lors d'une étape H3, le dispositif-client UE scrute ledit message et notamment l'en-tête Flush-DNS.

Cet en-tête Flush-DNS informe le dispositif-client UE qu'il doit effacer immédiatement (date=now) de sa copie locale l'enregistrement correspondant à l'adresse du P-CSCF1, et ce, sans effectuer d'interrogation DNS (do-not-check). L'opération de maintenance étant planifiée pour une durée de 10 heures, le ttl est positionné à une valeur de 36000 secondes.

Lors d'une étape H4, conformément à l'en-tête Flush-DNS reçu, le dispositif-client UE supprime, pour une durée de 36000 secondes, son enregistrement relatif au serveur P-CSCF1.

Lors d'une étape H5, le dispositif-client UE envoie donc une requête d'enregistrement REGISTER au serveur P-CSCF2.

Enfin, lors d'une étape H6, après avoir reçu l'accusé de réception (« 200 OK »), le dispositif-client UE envoie une requête INVITE au serveur P-CSCF2.

En fonction des besoins, l'Homme du Métier saura définir d'autres instructions complémentaires que celles présentées dans les modes de réalisation décrits ci-dessus. Par exemple, la première entité pourrait utiliser une instruction complémentaire « add=... » pour demander à la seconde entité *d'ajouter* un enregistrement DNS.

Dans la description ci-dessus de modes de réalisation de l'invention, les messages envoyés par une première entité conformément à l'invention utilisaient le nouvel en-tête « Flush-DNS ». Mais d'autres formats sont évidemment possibles pour ces messages.

Ainsi, en variante, l'indication selon l'invention du besoin de modifier une copie d'une information DNS peut être véhiculée dans un corps de message (body xml) d'un nouveau type, que l'on appellera « application/flushDNS ». Un délimiteur xml spécifique permet alors de loger séparément chacune des éventuelles instructions complémentaires selon l'invention.

Selon encore une autre variante, l'indication selon l'invention du besoin de modifier une copie d'une information DNS peut être véhiculée en tant que paramètre de l'en-tête « Via ». Cette variante n'est toutefois possible que dans le cadre d'un message destiné au nœud adjacent, lequel prendra connaissance des éventuelles instructions complémentaires par inspection du contenu de l'en-tête Via de premier niveau (« topmost »).

De manière générale, la présente invention peut être mise en œuvre au sein des nœuds d'un réseau IP, par exemple des serveurs de cœur de réseau IMS ou des dispositifs-clients, au moyen de composants logiciels et/ou matériels.

Les composants logiciels pourront être intégrés à un programme d'ordinateur classique de gestion de nœud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en œuvre de l'un quelconque des procédés de mise à jour dynamique d'informations DNS selon l'invention.

En effet, l'invention vise aussi un programme d'ordinateur téléchargeable depuis un réseau de communication comprenant des instructions pour l'exécution des étapes d'un procédé de mise à jour dynamique d'informations DNS selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive »* en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution de l'un quelconque des procédés de mise à jour dynamique d'informations DNS selon l'invention.

## Revendications

1. Procédé de mise à jour dynamique d'informations DNS dans un réseau IP, comprenant les étapes suivantes :
- une première entité dudit réseau IP, distincte des serveurs DNS du réseau IP, reçoit (E1, F1, G1, H1) une requête (SIP REGISTER, SIP INVITE) de la part d'une seconde entité du réseau IP, elle aussi distincte des serveurs DNS du réseau IP mais possédant une copie d'une information, dite information DNS, d'un type faisant l'objet d'un enregistrement dans au moins un serveur DNS du réseau IP,
- ladite première entité répond (E2, F2, G2, H2) à ladite requête (SIP REGISTER, SIP INVITE) en envoyant à ladite seconde entité un message comportant une indication (*Flush-DNS*) relative au besoin de modifier ladite copie,
- suite à la réception dudit message envoyé par la première entité, la seconde entité scrute le message (E3, F3, G3, H3) pour déterminer si ladite indication (*Flush-DNS*) contient au moins une instruction complémentaire (*do-not-check, remove, add, modify, ttl, priority*)*,* et
- en cas de détermination positive, la seconde entité :
• effectue une interrogation DNS (E4, F4), et, suite à la réception (E5, F5) de la réponse du serveur DNS interrogé, modifie (E6, F6) sa copie de ladite information DNS sur la base du contenu de ladite réponse ainsi que de ladite instruction complémentaire (*remove, add, modify, ttl, priority*)*,* ou
• modifie (H4) sa copie de ladite information DNS sur la base de ladite instruction complémentaire (*remove, add, modify, ttl, priority*) sans effectuer d'interrogation DNS (*do-not-check*)*.*

2. Procédé de mise à jour dynamique d'informations DNS selon la revendication 1, **caractérisé en ce que** ladite indication (*Flush-DNS*) contenue dans le message envoyé par la première entité comprend une durée d'attente (*date*) pour la mise en œuvre par la seconde entité d'une interrogation DNS.

3. Procédé de mise à jour dynamique d'informations DNS selon la revendication 1, **caractérisé en ce que**, en cas de détermination négative, la seconde entité :
- effectue (G4) une interrogation DNS, et
- suite à la réception (G5) de la réponse du serveur DNS interrogé, met à jour (G6) sa copie de ladite information DNS sur la base du contenu de ladite réponse.

4. Procédé de mise à jour dynamique d'informations DNS selon l'une quelconque des revendications 1 à 3, **caractérisé en ce que** la première entité constate ledit besoin de modifier ladite copie d'une information DNS suite à la réception par la première entité d'un message de notification envoyé par un agent de supervision chargé de notifier certains changements de configuration d'un serveur DNS aux entités du réseau IP ayant souscrit à ce type de notification.

5. Procédé de mise à jour dynamique d'informations DNS selon l'une quelconque des revendications 1 à 4, **caractérisé en ce que** ladite première entité est un serveur de cœur de réseau.

6. Procédé de mise à jour dynamique d'informations DNS selon l'une quelconque des revendications 1 à 5, **caractérisé en ce que** ladite seconde entité est un dispositif-client ou un serveur de cœur de réseau.

7. Dispositif, dit seconde entité, d'un réseau IP, distincte des serveurs DNS dudit réseau IP, et possédant des moyens pour :
- envoyer une requête (SIP REGISTER, SIP INVITE) à une autre entité du réseau IP, dite première entité, elle aussi distincte des serveurs DNS du réseau IP,
- recevoir en réponse, de la part de ladite première entité, un message comportant une indication (*Flush-DNS*) relative au besoin de modifier sa copie d'une information, dite information DNS, d'un type faisant l'objet d'un enregistrement dans au moins un serveur DNS du réseau IP,
- scruter ledit message pour déterminer si ladite indication (*Flush-*DNS) contient au moins une instruction complémentaire (*do-not-check, remove, add, modify, ttl, priority*)*,* et
- en cas de détermination positive :
• effectuer une interrogation DNS, et, suite à la réception de la réponse du serveur DNS interrogé, modifier sa copie de ladite information DNS sur la base du contenu de ladite réponse ainsi que de ladite instruction complémentaire (*remove, add, modify, ttl, priority*)*,* ou
• modifier sa copie de ladite information DNS sur la base de ladite instruction complémentaire (*remove, add, modify, ttl, priority*) sans effectuer d'interrogation DNS (*do-not-check*)*.*

8. Seconde entité selon la revendication 7, **caractérisée en ce qu'**elle possède en outre des moyens pour mettre en œuvre une interrogation DNS après une durée d'attente (*date*) mentionnée dans ladite indication (*Flush-DNS*)*.*

9. Seconde entité selon la revendication 7, **caractérisée en ce que**, en cas de détermination négative, elle possède en outre des moyens pour :
- effectuer une interrogation DNS, et
- suite à la réception de la réponse du serveur DNS interrogé, mettre à jour sa copie de ladite information DNS sur la base du contenu de ladite réponse.

10. Serveur de cœur de réseau IP, **caractérisé en ce qu'**il comprend une seconde entité selon l'une quelconque des revendications 7 à 9.

11. Terminal, **caractérisé en ce qu'**il comprend une seconde entité selon l'une quelconque des revendications 7 à 9.

12. Réseau IP (1) comprenant :
- un dispositif, dit première entité, du réseau IP, distincte des serveurs DNS dudit réseau IP ; et
- un dispositif, dit seconde entité du réseau IP, distincte des serveurs DNS dudit réseau IP, et conforme à l'une quelconque des revendications 7 à 9 ;
ladite première entité possédant des moyens pour :
- recevoir une requête (SIP REGISTER, SIP INVITE) de la part de ladite seconde entité du réseau IP,
- constater un besoin pour ladite seconde entité du réseau IP de modifier sa copie d'une information, dite information DNS, d'un type faisant l'objet d'un enregistrement dans au moins un serveur DNS du réseau IP,
- envoyer à ladite seconde entité du réseau IP, en réponse à ladite requête (SIP REGISTER, SIP INVITE), un message comportant une indication (*Flush-DNS*) relative audit besoin, et
- souscrire à la notification de certains changements de configuration d'un serveur DNS auprès d'un agent de supervision dédié,
lesdits moyens pour constater un besoin de modifier ladite copie d'une information DNS comprenant des moyens de réception d'un message de notification envoyé par ledit agent de supervision.

13. Moyen de stockage de données inamovible, ou partiellement ou totalement amovible, comportant des instructions de code de programme informatique pour l'exécution des étapes d'un procédé de mise à jour dynamique d'informations DNS selon l'une quelconque des revendications 1 à 6.

14. Programme d'ordinateur téléchargeable depuis un réseau de communication et/ou stocké sur un support lisible par ordinateur et/ou exécutable par un microprocesseur, **caractérisé en ce qu'**il comprend des instructions pour l'exécution des étapes d'un procédé de mise à jour dynamique d'informations DNS selon l'une quelconque des revendications 1 à 6, lorsqu'il est exécuté sur un ordinateur.

## Patentansprüche

1. Verfahren zur dynamischen Aktualisierung von DNS-Informationen in einem IP-Netzwerk, das die folgenden Schritte enthält:
- eine erste Entität des IP-Netzwerks, anders als die DNS-Server des IP-Netzwerks, empfängt (E1, F1, G1, H1) eine Anforderung (SIP REGISTER, SIP INVITE) von einer zweiten Entität des IP-Netzwerks, auch sie anders als die DNS-Server des IP-Netzwerks, die aber eine Kopie einer Information, DNS-Information genannt, von einem Typ besitzt, der Gegenstand einer Speicherung in mindestens einem DNS-Server des IP-Netzwerks ist,
- die erste Entität antwortet (E2, F2, G2, H2) auf die Anforderung (SIP REGISTER, SIP INVITE), indem sie an die zweite Entität eine Nachricht schickt, die eine Angabe (Flush-DNS) bezüglich der Notwendigkeit der Änderung der Kopie aufweist,
- nach dem Empfang der von der ersten Entität gesendeten Nachricht durchsucht die zweite Entität die Nachricht (E3, F3, G3, H3), um zu bestimmen, ob die Angabe (Flush-DNS) mindestens eine komplementäre Anweisung (do-not-check, remove, add, modify, tt1, priority) enthält, und
- im Fall einer positiven Bestimmung die zweite Entität:
• eine DNS-Abfrage (E4, F4) ausführt und nach dem Empfang (E5, F5) der Antwort vom abgefragten DNS-Server ihre Kopie der DNS-Information auf der Basis des Inhalts der Antwort sowie der komplementären Anweisung (remove, add, modify, tt1, priority) ändert (E6, F6), oder
• ihre Kopie der DNS-Information auf der Basis der komplementären Anweisung (remove, add, modify, tt1, priority) ändert (H4), ohne eine DNS-Abfrage auszuführen (do-not-check).

2. Dynamisches Aktualisierungsverfahren von DNS-Informationen nach Anspruch 1, **dadurch gekennzeichnet, dass** die in der von der ersten Entität gesendeten Nachricht enthaltene Angabe (Flush-DNS) eine Wartezeit (date) für die Durchführung einer DNS-Abfrage durch die zweite Entität enthält.

3. Dynamisches Aktualisierungsverfahren von DNS-Informationen nach Anspruch 1, **dadurch gekennzeichnet, dass** im Fall einer negativen Bestimmung die zweite Entität:
- eine DNS-Abfrage ausführt (G4), und
- nach dem Empfang (G5) der Antwort des abgefragten DNS-Servers ihre Kopie der DNS-Information auf der Basis des Inhalts der Antwort aktualisiert (G6).

4. Dynamisches Aktualisierungsverfahren von DNS-Informationen nach einem der Ansprüche 1 bis 3, **dadurch gekennzeichnet, dass** die erste Entität die Notwendigkeit der Änderung der Kopie einer DNS-Information nach dem Empfang durch die erste Entität einer Benachrichtigungs-Nachricht feststellt, die von einem Überwachungsagent gesendet wird, der die Aufgabe hat, bestimmte Konfigurationsänderungen eines DNS-Servers den Entitäten des IP-Netzwerks mitzuteilen, die diese Art Benachrichtigung abonniert haben.

5. Dynamisches Aktualisierungsverfahren von DNS-Informationen nach einem der Ansprüche 1 bis 4, **dadurch gekennzeichnet, dass** die erste Entität ein Netzkernserver ist.

6. Dynamisches Aktualisierungsverfahren von DNS-Informationen nach einem der Ansprüche 1 bis 5, **dadurch gekennzeichnet, dass** die zweite Entität eine Client-Vorrichtung oder ein Netzkernserver ist.

7. Vorrichtung, zweite Entität genannt, eines IP-Netzwerks, anders als die DNS-Server des IP-Netzwerks und die Einrichtungen besitzt, um:
- eine Anforderung (SIP REGISTER, SIP INVITE) an eine andere Entität des IP-Netzwerks, erste Entität genannt, zu senden, die auch anders ist als die DNS-Server des IP-Netzwerks,
- als Antwort von der ersten Entität eine Nachricht zu empfangen, die eine Angabe (Flush-DNS) bezüglich der Notwendigkeit aufweist, ihre Kopie einer Information, DNS-Information genannt, eines Typs zu ändern, der Gegenstand einer Speicherung in mindestens einem DNS-Server des IP-Netzwerks ist,
- die Nachricht zu durchsuchen, um zu bestimmen, ob die Angabe (Flush-DNS) mindestens eine komplementäre Anweisung (do-not-check, remove, add, modify, tt1, priority) enthält, und
- im Fall einer positiven Bestimmung:
• eine DNS-Abfrage auszuführen, und nach dem Empfang der Antwort vom abgefragten DNS-Server ihre Kopie der DNS-Information auf der Basis des Inhalts der Antwort sowie der komplementären Anweisung (remove, add, modify, tt1, priority) zu ändern, oder
• ihre Kopie der DNS-Information auf der Basis der komplementären Anweisung (remove, add, modify, tt1, priority) ohne Ausführung einer DNS-Abfrage (do-not-check) zu ändern.

8. Zweite Entität nach Anspruch 7, **dadurch gekennzeichnet, dass** sie außerdem Einrichtungen besitzt, um eine DNS-Abfrage nach einer Wartezeit (date) durchzuführen, die in der Angabe (Flush-DNS) erwähnt ist.

9. Zweite Entität nach Anspruch 7, **dadurch gekennzeichnet, dass** sie im Fall einer negativen Bestimmung außerdem Einrichtungen besitzt, um:
- eine DNS-Abfrage auszuführen, und
- nach dem Empfang der Antwort vom abgefragten DNS-Server ihre Kopie der DNS-Information auf der Basis des Inhalts der Antwort zu aktualisieren.

10. Kernserver eines IP-Netzwerks, **dadurch gekennzeichnet, dass** er eine zweite Entität nach einem der Ansprüche 7 bis 9 enthält.

11. Endgerät, **dadurch gekennzeichnet, dass** es eine zweite Entität nach einem der Ansprüche 7 bis 9 enthält.

12. IP-Netzwerk (1), das enthält:
- eine Vorrichtung, erste Entität genannt, des IP-Netzwerks, anders als die DNS-Server des IP-Netzwerks; und
- eine Vorrichtung, zweite Entität des IP-Netzwerks genannt, anders als die DNS-Server des IP-Netzwerks und gemäß einem der Ansprüche 7 bis 9;
wobei die erste Entität Einrichtungen besitzt, um:
- eine Anforderung (SIP REGISTER, SIP INVITE) von der zweiten Entität des IP-Netzwerks zu empfangen,
- eine Notwendigkeit für die zweite Entität des IP-Netzwerks festzustellen, ihre Kopie einer Information, DNS-Information genannt, eines Typs, der Gegenstand einer Speicherung in mindestens einem DNS-Server des IP-Netzwerks ist, zu ändern,
- an die zweite Entität des IP-Netzwerks als Antwort auf die Anforderung (SIP REGISTER, SIP INVITE) eine Nachricht zu senden, die eine Angabe (Flush-DNS) bezüglich der Notwendigkeit aufweist, und
- die Benachrichtigung über bestimmte Konfigurationsabänderungen eines DNS-Servers bei einem dedizierten Überwachungsagent zu abonnieren,
wobei die Einrichtungen zur Feststellung einer Notwendigkeit der Änderung der Kopie einer DNS-Information Einrichtungen für den Empfang einer vom Überwachungsagent gesendeten Benachrichtigungsnachricht enthalten.

13. Nicht entfernbare oder teilweise oder vollständig entfernbare Datenspeichereinrichtung, die EDV-Programmcodeanweisungen für die Ausführung der Schritte eines dynamischen Aktualisierungsverfahrens von DNS-Informationen nach einem der Ansprüche 1 bis 6 aufweist.

14. Computerprogramm, das von einem Kommunikationsnetzwerk heruntergeladen werden kann und/oder auf einem computerlesbaren Träger gespeichert ist und/oder von einem Mikroprozessor ausgeführt werden kann, **dadurch gekennzeichnet, dass** es Anweisungen zur Ausführung der Schritte eines dynamischen Aktualisierungsverfahrens von DNS-Informationen nach einem der Ansprüche 1 bis 6 enthält, wenn es auf einem Computer ausgeführt wird.

## Claims

1. Method for dynamic updating of DNS information in an IP network, comprising the following steps:
- a first entity of said IP network, distinct from the DNS servers of the IP network, receives (E1, F1, G1, H1) a request (SIP REGISTER, SIP INVITE) from a second entity of the IP network, it also being distinct from the DNS servers of the IP network but having a copy of information, called DNS information, on a type forming the subject of a registration in at least one DNS server of the IP network,
- said first entity responds (E2, F2, G2, H2) to said request (SIP REGISTER, SIP INVITE) by sending to said second entity a message comprising an indication *(Flush-DNS)* relating to the need to modify said copy,
- following the reception of said message sent by the first entity, the second entity scans the message (E3, F3, G3, H3) to determine whether said indication (*Flush-DNS*) contains at least one additional instruction (*do-not-check, remove, add, modify, ttl, priority*), and
- in the event of positive determination, the second entity:
• performs a DNS interrogation (E4, F4), and, following the reception (E5, F5) of the response from the interrogated DNS server, modifies (E6, F6) its copy of said DNS information on the basis of the content of said response and of said additional instruction (*remove, add, modify, ttl, priority*)*,* or
• modifies (H4) its copy of said DNS information on the basis of said additional instruction (*remove, add, modify, ttl, priority*) without performing a DNS interrogation (*do-not-check*)*.*

2. Method for dynamic updating of DNS information according to Claim 1, **characterized in that** said indication (*Flush-DNS*) contained in the message sent by the first entity comprises a waiting time (*date*) for the implementation by the second entity of a DNS interrogation.

3. Method for dynamic updating of DNS information according to Claim 1, **characterized in that**, in the event of negative determination, the second entity:
- performs (G4) a DNS interrogation, and
- following the reception (G5) of the response from the interrogated DNS server, updates (G6) its copy of said DNS information on the basis of the content of said response.

4. Method for dynamic updating of DNS information according to any one of Claims 1 to 3, **characterized in that** the first entity discovers said need to modify said copy of DNS information following the reception by the first entity of a notification message sent by a supervision agent responsible for notifying certain changes of configuration of a DNS server to the entities of the IP network having subscribed to this type of notification.

5. Method for dynamic updating of DNS information according to any one of Claims 1 to 4, **characterized in that** said first entity is a core network server.

6. Method for dynamic updating of DNS information according to any one of Claims 1 to 5, **characterized in that** said second entity is a client device or a core network server.

7. Device, called second entity, of an IP network, distinct from the DNS servers of said IP network, and having means for:
- sending a request (SIP REGISTER, SIP INVITE) to another entity of the IP network, called first entity, it also being distinct from the DNS servers of the IP network,
- receiving in response, from said first entity, a message comprising an indication (*Flush-DNS*) relating to the need to modify its copy of information, called DNS information, on a type forming the subject of a registration in at least one DNS server of the IP network,
- scanning said message to determine whether said indication (*Flush-DNS*) contains at least one additional instruction (*do-not-check, remove, add, modify, ttl, priority*)*,* and
- in the event of positive determination:
• performing a DNS interrogation, and, following the reception of the response from the interrogated DNS server, modifying its copy of said DNS information on the basis of the content of said response and of said additional instruction (*remove, add, modify, ttl, priority*), or
• modifying its copy of said DNS information on the basis of said additional instruction (*remove, add, modify, ttl, priority*) without performing a DNS interrogation (*do-not-check*)*.*

8. Second entity according to Claim 7, **characterized in that** it also has means for implementing a DNS interrogation after a waiting time (*date*) mentioned in said indication (*Flush-DNS*)*.*

9. Second entity according to Claim 7, **characterized in that**, in the event of negative determination, it also has means for:
- performing a DNS interrogation, and
- following the reception of the response from the interrogated DNS server, updating its copy of said DNS information on the basis of the content of said response.

10. IP core network server, **characterized in that** it comprises a second entity according to any one of Claims 7 to 9.

11. Terminal, **characterized in that** it comprises a second entity according to any one of Claims 7 to 9.

12. IP network (1) comprising:
- a device, called first entity, of the IP network, distinct from the DNS servers of said IP network; and
- a device, called second entity of the IP network, distinct from the DNS servers of said IP network, and conforming to any one of Claims 7 to 9;
said first entity having means for:
- receiving a request (SIP REGISTER, SIP INVITE) from said second entity of the IP network,
- discovering a need for said second entity of the IP network to modify its copy of information, called DNS information, on a type forming the subject of a registration in at least one DNS server of the IP network,
- sending to said second entity of the IP network, in response to said request (SIP REGISTER, SIP INVITE), a message comprising an indication (*Flush-DNS*) relating to said need, and
- subscribing to the notification of certain changes of configuration of a DNS server from a dedicated supervision agent,
said means for discovering a need to modify said copy of DNS information comprising means for receiving a notification message sent by said supervision agent.

13. Non-removable, or partially or totally removable, data storage means, comprising computer program code instructions for the execution of the steps of a method for dynamic updating of DNS information according to any one of Claims 1 to 6.

14. Computer program that can be downloaded from a communication network and/or stored on a computer"-readable medium and/or that can be executed by a microprocessor, **characterized in that** it comprises instructions for the execution of the steps of a method for dynamic updating of DNS information according to any one of Claims 1 to 6, when it is run on a computer.
